Europäisches Patentamt

European Patent Office

Office européen des brevets

(19)

(11) Veröffentlichungsnummer: **0 011 080**

**A1**

(12) **EUROPÄISCHE PATENTANMELDUNG**

(21) Anmeldenummer: **79101223.0**

(22) Anmeldetag: **23.04.79**

(51) Int. Cl.³: **B 23 B 31/16**

(30) Priorität: **10.11.78 DE 2848740**

(43) Veröffentlichungstag der Anmeldung:
**28.05.80 Patentblatt 80 11**

(84) Benannte Vertragsstaaten:
**CH DE FR GB IT**

(71) Anmelder: **Röhm, Günter Horst**
**Heinrich-Röhm-Strasse 50**
**D-7927 Sontheim(DE)**

(72) Erfinder: **Röhm, Günter Horst**
**Heinrich-Röhm-Strasse 50**
**D-7927 Sontheim(DE)**

(74) Vertreter: **Fay, Hermann, Dipl.-Phys. Dr.**
**Postfach 1767**
**Ensingerstrasse 21 D-7900 Ulm (Donau)(DE)**

(54) **Spannfutter mit radial zur Futterachse in einem Futterkörper verstellbaren Spannbacken.**

㊸ Spannfutter für Drehmaschinen mit Spannbacken (2) aus einem axial vorderen Backenteil (2a) und einem axial hinteren Backenteil (2b), die jeweils für sich radial im Futterkörper (1) geführt und lösbar miteinander verbunden sind. Um dem Spannfutter eine möglichst große Kraftsteinfigkeit zu erteilen, damit die in das Spannfutter eingeleitete Antriebskraft mit möglichst hohem Wirkungsgrad an den Spannbacken (2) wirksam werden kann, laufen die hinteren Backenteile (2b) in Führungskanälen (11), die in einem einteiligen Stück des Futterkörpers (1) ausgebildet und davon rundum bis auf ein zwischen den Enden des jeweiligen Führungskanales (11) befindliches Fenster (12) umschlossen sind, durch das hindurch der vordere mit dem hinteren Backenteil verbunden ist. Der vordere Backenteil (2b) deckt in jeder seiner möglichen Radialverstellungen das Fenster (12) ab. In der Regel sind die Führungskanäle (11) kreiszylindrische Bohrungen und die hinteren Backenteile (2b) entsprechende Bolzen.

Fig. 1

EP 0 011 080 A1

- 1 -

Spannfutter mit radial zur Futterachse in einem
Futterkörper verstellbaren Spannbacken.

Die Erfindung betrifft ein Spannfutter mit radial
zur Futterachse in einem Futterkörper verstellbaren und dazu einzeln oder gemeinsam mit einem
Antriebsglied im Eingriff stehenden Spannbacken,
die jeweils radial und quer zur Futterachse in
einen axial vorderen Backenteil und einen axial
hinteren Backenteil aufgetrennt sind, wobei die
beiden Backenteile lösbar miteinander verbunden
und an jeweils eigenen Führungsflächen des Futterkörpers geführt sind und nur der hintere Backenteil mit dem Antriebsglied im Eingriff steht.

Bei derartigen, zumeist als Kraftspannfutter
arbeitenden Spannfuttern dient die Zweiteilung
der Spannbacken in einen vorderen und einen hinteren Backenteil dem Zweck, in einfacher Weise
den Spannradius verstellen und/oder einen Backenwechsel vornehmen zu können. Dazu ist ein von außen ein- und ausrückbares Kupplungsstück vorgesehen, das im eingerückten Kupplungszustand beide Backenteile zur radialen Mitnahme des vorderen Backenteiles durch den hinteren Backenteil verbindet und im ausgerückten Kupplungszustand den vorderen Backenteil zur vom hinteren Backenteil unabhängigen radialen Verstellung freigibt. Der hintere Backenteil besitzt senkrecht zu seiner radialen Führungsachse einen rechteckigen oder quadratischen Grundriß und läuft in einer radialen Führungsnut eines axial vorderen, auch den vorderen Backenteil führenden Futterkörperstückes, an dessen rückwärtiger Stirnseite die Führungsnuten für die hinteren Backenteile über ihre gesamte radiale Länge, also bis zum äußeren Umfang des Futterkörpers hin, offen sind, einerseits um die Führungsnuten überhaupt herstellen, andererseits in ihnen die hinteren Backenteile und die Kupplungsstücke montieren zu können. Diese Führungsnuten sind durch einen von hinten auf das vordere Futterkörperstück aufgeschraubten Futterkörperdeckel verschlossen, in dem auch ein Verriegelungsring für die in den Führungsnuten zugänglichen Kupplungsstücke geführt ist. Im Ergebnis ist der Futterkörper zumindest zweiteilig mit längs den Führungsnuten verlaufender Trennfläche bzw. Trennebene ausgebildet. - Futterkörper dieses zweiteiligen Aufbaus mit längs den Führungsnuten für die Spannbacken verlaufender Trennfläche bzw. Trennebene sind im übrigen vielfach unabhängig davon bekannt, ob die Spannbacken in der eingangs erwähnten Weise zweigeteilt oder einstückig ausgebildet sind.

Unabhängig von ihrem Aufbau im einzelnen sind in der Entwicklung von Spannfuttern immer Bauformen angestrebt worden, die einen möglichst großen Teil der zu ihrer Betätigung eingeleiteten Antriebskraft als Spannkraft an den Spannbacken wirksam werden lassen, also einen möglichst hohen Wirkungsgrad in der Kraftübertragung vom Antriebsglied auf die Spannbacken erreichen. Dieser Wirkungsgrad hat bisher immer Wünsche übrig gelassen, da er mit von der Steifigkeit des Futterkörpers beeinflußt wird, der Futterkörper vor allem aber durch die unvermeidlichen Führungsausnehmungen für die Spannbacken geschwächt wird. Um diese Schwächung in tragbaren Grenzen zu halten, muß der Futterkörper möglichst massiv sein und aus einem für hohe Kraftbeanspruchungen ausgelegten Stahl bestehen, was aber mit einer hohen Schwungmasse verbunden und daher besonders bei NC-Drehmaschinen mit ihren sehr kurzen Anlauf- und Abbremszeiten äußerst nachteilig ist.

Der Erfindung liegt die Aufgabe zugrunde, ein Spannfutter der eingangs genannten Art so auszubilden, daß es einen möglichst guten Wirkungsgrad für die Kraftübertragung vom Antriebsglied auf die Spannbacken besitzt,daß also die Antriebskraft mit einem optimalen Anteil an den Spannbacken als
Spannkraft wirksam wird.

Diese Aufgabe wird nach der Erfindung dadurch gelöst, daß die hinteren Backenteile in Führungskanälen laufen, die in einem einteiligen Stück
des Futterkörpers ausgebildet und sowohl in einem
radial inneren Führungsbereich als auch in einem
radial äußeren Führungsbereich in Bezug auf ihre
radiale Führungsachse rundum von diesem einteiligen
Stück des Futterkörpers umschlossen sind, und daß
zwischen diesen Führungsbereichen im Futterkörper
ein den Führungskanal mit der Vorderseite des
Futterkörpers verbindendes Fenster vorgesehen ist,
durch das hindurch der hintere Backenteil am
vorderen Backenteil befestigt ist, der auf einer
die Fenstermündung enthaltenden, zur Futterachse
senkrechten Führungsebene aufliegt und in jeder
seiner Stellungen das Fenster abdeckt.

Überraschenderweise zeigt ein Spannfutter mit einem
derart ausgebildeten Futterkörper eine außerordentlich hohe Kraftübertragungssteifigkeit zwischen dem
Antriebsglied und den Spannbacken, was vermutlich
darauf zurückzuführen ist, daß die Führungskanäle,
von der Futterachse aus gesehen, bis auf den
Fensterbereich radial diesseits und jenseits des
Fensters rundum geschlossen, also nicht durch eine
Trennfläche des Futterkörpers unterbrochen sind.
Das ergibt nicht nur eine lange Führung für die

- 5 -

hinteren Backenteile. Wesentlicher dürfte sein,
daß die in den beiden Führungsbereichen einstückige
Umschließung des Führungskanales durch das einteilige Futterkörperstück ein gegenseitiges Auffedern der Führungsflächen für die hinteren Backenteile sicher verhindert, daß sich diese Führungsflächen also extrem starr verhalten und keine
Kraftverluste durch störende elastische Futterkörperverformungen gestatten. Die vorderen Backenteile
sind, radial gesehen, vor allem beidseits des
Fensters an der Führungsebene des Futterkörpers
abgestützt, also ebenfalls in einem Bereich, in
dem der Futterkörper Druckkräfte ohne weiteres mit
äußerst kraftsteifer Reaktion aufnehmen kann, so
daß die an den vorderen Backenteilen wirksam werdenden wesentlichen Momente praktisch verformungslos vom Futterkörper aufgefangen werden. Darüber
hinaus besitzt das erfindungsgemäße Spannfutter
den Vorteil, daß die vorderen Backenteile ihr jeweiliges Fenster im Futterkörper immer abdecken,
so daß Verschmutzungen der Führungskanäle, der
Fenster oder überhaupt des Futterinneren durch
Bearbeitungsrückstände ohne weitere Maßnahmen
zuverlässig vermieden werden.

Als Antriebsverbindung zwischen dem Antriebsglied
und den hinteren Spannbackenteilen sind alle
hierfür an sich bekannten und geeigneten Getriebe
und Getriebeglieder geeignet, soweit sie nur die
allseitige Umschließung der Führungskanäle in ihren jeweils beiden Führungsbereichen durch das einteilige Futterkörperstück zulassen. In einer zugleich wegen ihrer konstruktiven Einfachheit und ihrer vorteilhaften Krafteinleitung vom Antriebsglied in die hinteren Backenteile bevorzugten Ausführungsform ist das Spannfutter nach der Erfindung allerdings als an sich bekanntes Keilspannfutter ausgebildet, bei dem die hinteren Backenteile über Keilhaken mit dem Antriebsglied, in der Regel einem Antriebskolben, im Eingriff stehen.

Auch die Befestigung des jeweils vorderen Backenteiles durch das Fenster hindurch am hinteren Backenteil kann auf verschiedene Weise geschehen, vorzugsweise dadurch, daß die vorderen Backenteile ein ihre Befestigung am hinteren Backenteil bewirkendes Ansatzstück aufweisen, das in das Fenster greift und radial um die Hublänge der Spannbacke kürzer als das Fenster ist. Die Befestigung des vorderen Backenteiles am hinteren Backenteil kann dabei mittels eines der schon erwähnten von außen ein- und ausrückbaren Kupplungsstücke geschehen, aber auch beispielsweise durch unmittelbares Verschrauben beider Backenteile, wenn es auf ein einfaches und schnelles Ein- und Auskuppeln der beiden Backenteile nicht ankommt. Außer der Führung des vorderen Backenteiles an der zur Futterachse senkrechten Führungsebene kann der vordere Backenteil senkrecht zu seiner radialen Verstellrichtung mittelbar eine Führung dadurch erfahren, daß das

- 7 -

Ansatzstück an den in Verstellrichtung der Spannbacke verlaufenden Fensterrändern geführt ist. Statt
dessen oder zusätzlich besteht weiter die Möglichkeit, die vorderen Backenteile in zur Vorderseite
des Futterkörpers hin offenen Nuten zu führen,
deren Nutboden die zur Futterachse senkrechte,
die Fenstermündung enthaltende Führungsebene bildet.

Die Befestigung der vorderen Backenteile mit ihrem
jeweils hinteren Backenteil kann von der Vorderseite des Spannfutters durch den vorderen Backenteil hindurch erfolgen. Es besteht aber auch die
Möglichkeit, diese Befestigung von der Rückseite
des Spannfutters her vorzunehmen und dazu im einteiligen Stück des Futterkörpers an in axialer
Richtung dem Fenster gegenüberliegender Stelle
eine den Führungskanal mit der Rückseite des
Futterkörpers verbindende Öffnung vorzusehen, durch
die eine die beiden Backenteile aneinander befestigende Verbindungseinrichtung hindurch zugänglich und betätigbar ist. Eine solche Verbindungseinrichtung kann beispielsweise eine Schraubverbindung sein. Die erwähnte Öffnung beeinträchtigt
die durch die Erfindung erreichte Steifigkeit
des einteiligen Futterkörperstückes nicht, da sie
zwischen den beiden Führungsbereichen des Führungskanales, nämlich an der dem Fenster gegenüberliegenden Stelle liegt.

- 8 -

Vorzugsweise sind die Führungskanäle kreiszylindrische Bohrungen und die hinteren Backenteile entsprechende Bolzen.

Die durch die Erfindung erreichte Festigkeit und Verformungssteifigkeit des einteiligen Futterkörperstückes ist so gut, daß sogar die Möglichkeit besteht, auf extrem feste und schwere Stahllegierungen für den Futterkörper zu verzichten. Ein besonders vorteilhafter Vorschlag der Erfindung geht daher dahin, zumindest den einstückigen Teil des Futterkörpers aus einer Leichtmetall-Legierung, insbesondere einer Aluminiumlegierung, herzustellen und in die Führungskanäle Stahlbüchsen einzusetzen, wobei diese Stahlbüchsen im wesentlichen die Aufgabe haben, den Verschleiß an den Führungsflächen gering zu halten.

Im folgenden wird die Erfindung an einem in der Zeichnung dargestellten Ausführungsbeispiel näher erläutert; es zeigen:

Fig. 1 einen Axialschnitt durch ein Spannfutter nach der Erfindung,

Fig. 2 eine Teilansicht des Spannfutters nach Fig. 1 in Richtung des in Fig. 1 eingetragenen Pfeiles II.

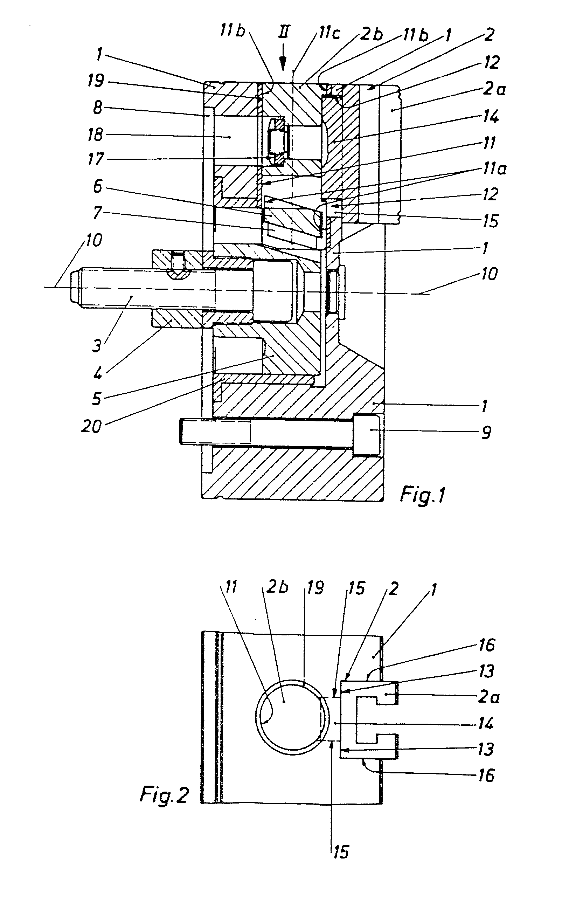

In der Zeichnung ist der Futterkörper des Spannfutters allgemein mit 1, die radial zur Futterachse im Futterkörper verstellbaren Spannbacken sind allgemein mit 2 bezeichnet. Im Axialschnitt nach Fig. 1 ist jeweils nur eine Spannbacke dargestellt, jedoch besitzen Futter der in Frage stehenden Art mehrere, in der Regel drei Spannbacken. Die Spannbacken 2 stehen zu ihrer radialen Verstellung mit einem Antriebsglied 4 in kraft- und formschlüssigem Eingriff, das im Ausführungsbeispiel einen axial im Futterkörper verstellbaren Treibkolben 5 aufweist, der über Keilhaken 6, 7 mit den Spannbacken 2 im Eingriff steht, wobei der Keilhaken 6 am Treibkolben 5, der Keilhaken 7 an der Spannbacke 2 sitzt. Wird der Treibkolben 5 in Fig. 1 nach links verschoben, so werden die Spannbacken 2 radial einwärts bewegt, bei entgegengesetzter axialer Verstellung des Treibkolbens 5 dagegen radial auswärts verschoben. Der Treibkolben 5 kann in hier nicht näher zu beschreibender, an sich bekannter Weise durch einen Spannzylinder betätigt werden, dessen Spannkolben durch die hohle Drehmaschinenspindel hindurch über eine Zugstange oder ein Zugrohr beispielsweise über einen axialen Schraubbolzen 3 mit dem Treibkolben 5 verbunden sein kann. Ein solcher Kraftspannzylinder kann auch unmittelbar am oder im Futterkörper 1 angeordnet sein. Auch kann anstelle des Treibkolbens 5 eine Treibhülse vorgesehen werden, insbesondere dann, wenn das Spannfutter einen zen-

tralen Durchgang besitzen soll. Auch ist in Fig. 1 der Einfachheit wegen der regelmäßig vorgesehene und zum Anschluß des Futterkörpers 1 an die nicht dargestellte Drehmaschinenspindel dienende Anschlußflansch nicht dargestellt, für dessen Aufnahme an der Rückseite des Futterkörpers 1 eine Eindrehung 8 vorgesehen ist. Die Verbindung dieses Futterflansches mit dem Futterkörper 1 erfolgt über Schrauben, von welchen in Fig. 1 eine erkennbar und mit 9 bezeichnet ist.

Zwar erfolgt im Ausführungsbeispiel die Kraftübertragung zwischen dem Antriebsglied 4 und den Spannbacken 2 über die Keilhaken 6, 7, die Antriebsverbindung kann aber auch mit jeder anderen bekannten Ausführungsform der Antriebsglieder erfolgen. Jedoch müssen unabhängig davon, wie im einzelnen das Antriebsglied oder die Antriebsglieder ausgebildet und im Eingriff mit den Spannbacken stehen mögen, immer zwei Merkmale verwirklicht sein. Erstens müssen die Spannbacken 2 radial und quer zur Futterachse 10 in einen axial vorderen Backenteil 2a und einen axial hinteren Backenteil 2b getrennt sein. Beide Backenteile 2a, 2b sind jeweils für sich an eigenen Führungsflächen des Futterkörpers 1 geführt und nur der hintere Backenteil 2b steht mit dem Antriebsglied 4 im Eingriff. Zweitens müssen die hinteren Backenteile 2b in Führungskanälen 11 laufen, die in einem einteiligen Stück des Futterkörpers 1 ausgebildet sind, wobei im Ausführungsbeispiel dieses einteilige Stück des
Futterkörpers insgesamt den Futterkörper 1 bildet.
Selbstverständlich besteht aber auch im Rahmen der
Erfindung die Möglichkeit, den Futterkörper 1 an
sich mehrteilig auszubilden, beispielsweise ebenfalls mit einem Futterkörperdeckel zu versehen,
vorausgesetzt nur, daß die Führungskanäle 11 ausschließlich in dem einteiligen Futterkörperstück
angeordnet sind und sowohl in einem radial inneren
Führungsbereich 11a als auch in einem radial
äußeren Führungsbereich 11b in Bezug auf ihre
radiale Führungsachse 11c rundum von diesem einteiligen Stück des Futterkörpers umschlossen sind.
Zwischen diesen beiden Führungsbereichen 11a, 11b
ist im Futterkörper 1 ein den Führungskanal 11
mit der Vorderseite des Futterkörpers 1 verbindendes Fenster 12 vorgesehen. Durch dieses
Fenster 12 hindurch ist der jeweils hintere
Backenteil 2b am vorderen Backenteil 2a befestigt.
Der vordere Backenteil 2a liegt auf einer die
Fenstermündung enthaltenden, zur Futterachse 10
senkrechten Führungsebene 13 auf und deckt in
jeder seiner Stellung das Fenster 12 ab, überlappt
also das Fenster 12 soweit, daß diese Überlappung
in jeder Backenstellung erhalten bleibt.

Das Ausführungsbeispiel zeigt einen besonders
einfachen Fall der Verbindung zwischen dem vorderen
und dem hinteren Backenteil. Dazu besitzt der vordere Backenteil 2a ein seine Befestigung am hinteren Backenteil 2b bewirkendes Ansatzstück 14. Dieses Ansatzstück 14 greift in das Fenster 12 und ist radial um die Hublänge der Spannbacke 2 kürzer als das Fenster 12, so daß das radial innere und äußere Fensterende die radiale Hubbewegung und den maximalen Hubweg der Spannbacke 2 nicht behindern kann. Das Ansatzstück 14 kann an den in Verstellrichtung der Spannbacken 2 verlaufenden Fensterrändern 15 geführt sein. Unter Umständen kann dann auf eine weitere Führung der vorderen Backenteile 2a senkrecht zu diesen Fensterrändern 15 verzichtet werden. Besser aber ist die in der Zeichnung dargestellte Ausführungsform, bei der die vorderen Backenteile 2a in zur Vorderseite des Futterkörpers 1 hin offenen Nuten 16 geführt sind, deren Nutboden die zur Futterachse 10 senkrechte, die Fenstermündung enthaltene Führungsebene 13 bildet. In beiden Fällen aber, ob nun die zur Futterachse 10 senkrechte Führungsebene 13 für die vorderen Backenteile 2a unmittelbar durch die Stirnebene des einteiligen Futterkörperstückes 1 oder durch den Nutboden gebildet wird, bewirkt die in radialer Richtung gesehene Abstützung der vorderen Backenteile 2a beidseits des Fensters 12 eine sehr reaktionssteife Aufnahme der beim Spannvorgang auf die vorderen Backenteile 2a ausgeübten Momente durch den einstückigen Futterkörperteil 1, der radial beiseits der Fenster 12 äußerst druckfest und damit praktisch nicht verformungsfähig ist. Abgesehen von dieser günstigen Momentenübertragung zwischen den vorderen Backenteilen 2a und dem einteiligen Stück des Futterkörpers 1 hat aber die Überlappung der Fenster 12
durch den jeweiligen vorderen Spannbackenteil 2a
den zusätzlichen Vorteil, daß vom Arbeitsvorgang
herrührende Verschmutzungen nicht in das Fenster
12 und damit in das Futterinnere eindringen können.

Die Verbindung zwischen dem jeweils vorderen und
hinteren Backenteil kann auf verschiedene Weise
erfolgen, beispielsweise durch von außen ein- und
ausrückbare Kupplungsstücke, was aber in der Zeichnung nicht dargestellt ist. Die Zeichnung zeigt eine
einfache Schraubverbindung 17 zwischen beiden
Backenteilen 2a, 2b und zwar in einer Ausführungsform, in der diese Schraubverbindung von der
Rückseite des Futterkörpers 1 her betätigt werden
kann. Dazu ist im einteiligen Stück des Futterkörpers 1 an in axialer Richtung dem Fenster 12
gegenüberliegender Stelle eine Öffnung 18 vorgesehen, die den Führungskanal 11 mit der Rückseite
des Futterkörpers 1 verbindet und durch die hindurch die Schraubverbindung 17 für die beiden Backenteile 2a, 2b zugänglich ist und betätigt werden
kann. Die Öffnung 18 schwächt nicht in störender
Weise den Futterkörper 1, da sie genau gegenüber
dem Fenster 12 liegt, also wie dieses zwischen
den beiden radial inneren und äußeren Führungsbereichen 11a, 11b, in welchen allein der Führungskanal 11 rundum durch den einstückigen Teil des
Futterkörpers 1 umschlossen sein muß.

Im übrigen empfiehlt es sich schon aus herstellungstechnischen Gründen, die Führungskanäle 11 als kreiszylindrische Bohrungen und die hinteren Backenteile 2b als im Querschnitt entsprechend kreiszylindrische Bolzen auszubilden. Der einstückige Teil des Futterkörpers 1, im Ausführungsbeispiel also der gesamte Futterkörper, kann aus einer Leichtmetall-Legierung, insbesondere einer geeigneten Aluminiumlegierung bestehen. Um dabei die Führungsflächen sowohl für die hinteren Spannbackenteile 2a in den Führungskanälen 11, aber auch die Führungsflächen für den Spannkolben 5 vor unzulässig hohem Verschleiß zu schützen, können in die Führungskanäle, sowie in die Führungsöffnungen für den Antriebskolben je eine Stahlbüchse 19, 20 eingesetzt sein. In den Führungskanälen 11 für die hinteren Backenteile 2b sind diese Stahlbüchsen 19 dann selbstverständlich mit dem Fenster 12 und der Öffnung 16 entsprechenden Aussparungen versehen.

0011080

- 1 -

Patentansprüche:

1. Spannfutter mit radial zur Futterachse in einem
Futterkörper verstellbaren und dazu einzeln
oder gemeinsam mit einem Antriebsglied im Eingriff stehenden Spannbacken, die jeweils radial
und quer zur Futterachse in einen axial vorderen Backenteil und einen axial hinteren Backenteil aufgetrennt sind, wobei die beiden Backenteile lösbar miteinander verbunden und an jeweils eigenen Führungsflächen des Futterkörpers
geführt sind und nur der hintere Backenteil
mit dem Antriebsglied im Eingriff steht, dadurch
gekennzeichnet, daß die hinteren Backenteile (2b)
in Führungskanälen (11) laufen, die in einem
einteiligen Stück des Futterkörpers (1) ausgebildet und sowohl in einem radial inneren
Führungsbereich (11a) als auch in einem radial
äußeren Führungsbereich (11b) in Bezug auf ihre
radiale Führungsachse (11c) rundum von diesem
einteiligen Stück des Futterkörpers (1) umschlossen sind, und daß zwischen diesen Führungsbereichen (11a, 11b) im Futterkörper (1)
ein den Führungskanal (11) mit der Vorderseite
des Futterkörpers (1) verbindendes Fenster (12)
vorgesehen ist, durch das hindurch der hintere
Backenteil (2b) am vorderen Backenteil (2a)
befestigt ist, der auf einer die Fenstermündung enthaltenden, zur Futterachse (10) senkrechten Führungsebene (13) aufliegt und in
jeder seiner Stellungen das Fenster (12) abdeckt.

2. Spannfutter nach Anspruch 1, dadurch gekennzeichnet, daß das Spannfutter als an sich bekanntes Keilspannfutter ausgebildet ist und die hinteren Backenteile (2b) über Keilhaken (6.7) mit dem Antriebsglied (4) im Eingriff stehen.

3. Spannfutter nach Anspruch 1 oder 2, dadurch gekennzeichnet, daß die vorderen Backenteile (2a) ein ihre Befestigung am hinteren Backenteil (2b) bewirkendes Ansatzstück (14) aufweisen, das in das Fenster (12) greift und radial um die Hublänge der Spannbacke (2) kürzer als das Fenster (12) ist.

4. Spannfutter nach Anspruch 3, dadurch gekennzeichnet, daß das Ansatzstück (14) an den in Verstellrichtung der Spannbacke (2) verlaufenden Fensterrändern (15) geführt ist.

5. Spannfutter nach einem der Ansprüche 1 bis 4, dadurch gekennzeichnet, daß die vorderen Backenteile (2a) in zur Vorderseite des Futterkörpers (1) hin offenen Nuten (16) geführt sind, deren Nutboden die zur Futterachse (10) senkrechte, die Fenstermündung enthaltende Führungsebene (13) bildet.

6. Spannfutter nach einem der Ansprüche 1 bis 5, dadurch gekennzeichnet, daß im einteiligen Stück des Futterkörpers (1) an in axialer Richtung dem Fenster (12) gegenüberliegender Stelle eine den Führungskanal (11) mit der Rückseite des Futterkörpers (1) verbindende Öffnung (18) vorgesehen ist, und daß eine die beiden Backenteile (2a, 2b) aneinander befestigende Verbindungseinrichtung (17) durch diese Öffnung (18) hindurch zugänglich und betätigbar ist.

7. Spannfutter nach einem der Ansprüche 1 bis 6, dadurch gekennzeichnet, daß die Führungskanäle (11) kreiszylindrische Bohrungen und die hinteren Backenteile (2b) entsprechende Bolzen sind.

8. Spannfutter nach einem der Ansprüche 1 bis 7, dadurch gekennzeichnet, daß zumindest der einstückige Teil des Futterkörpers (1) aus einer Leichtmetall-Legierung besteht und in die Führungskanäle (11) Stahlbüchsen (19) eingesetzt sind.

0011080

Fig.1

Fig.2

**Europäisches Patentamt**

**EUROPÄISCHER RECHERCHENBERICHT**

**0011080**
Nummer der Anmeldung

**EP 79 101 223.0**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 251 606 (R.G. OSWALD et al.)<br>* Spalte 1, Zeilen 13 bis 21; Spalte 2, Zeile 56 bis Spalte 3, Zeile 26; Fig. 1 und 4 *<br>-- | 1,3, 7 |
|  | US - A - 3 266 812 (W.F. MOTT et al.)<br>* Spalte 2, Zeilen 4 bis 17; Fig. 2 *<br>-- | 1,2 |
|  | FR - A - 1 256 940 (F. RAMBAUD)<br>* Seite 2, linke Spalte, Zeile 46 bis rechte Spalte, Zeile 52; Fig. 1 bis 6 *<br>-- | 1,2 |
|  | DE - B2 - 2 334 025 (P. FORKARDT KG)<br>* Spalten 2 bis 4; Fig. 2 *<br>-- | 1,2 |
|  | DE - U - 1 696 443 (P. FORKARDT KG)<br>* Anspruch 1 *<br>-- | 8 |
| P | DE - A1 - 2 729 939 (P. FORKARDT KG)<br>* Ansprüche 3 und 4; Seite 5, Zeilen 4 bis 6 *<br>-- | 1,7 |
| A | DE - A1 - 2 711 904 (G.H. RÖHM)<br>* Seite 21, Zeile 2 bis Seite 22, Zeile 6 *<br>--<br>./.. | 1,2 |

### KLASSIFIKATION DER ANMELDUNG (Int.Cl.)

B 23 B 31/16

### RECHERCHIERTE SACHGEBIETE (Int. Cl.)

B 23 B 31/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 26-02-1980 | MARTIN |

EPA form 1503.1 04.78

**Europäisches Patentamt**

**EUROPÄISCHER RECHERCHENBERICHT**

0011080
Nummer der Anmeldung

EP 79 101 223.0
- Seite 2 -

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| A | <u>DE - A1 - 2 639 818</u> (M. PINTO S.P.A.) <br> * Seite 4, Zeile 26 bis Seite 5, <br> Zeile 3; Seite 7, Zeilen 18 bis 30 * <br> ---- | 1 | |
| | | | **RECHERCHIERTE SACHGEBIETE (Int. Cl.)** |